# EUROPÄISCHE PATENTSCHRIFT

(11) **EP 1 625 910 B1**
(45) Veröffentlichungstag und Bekanntmachung des Hinweises auf die Patenterteilung: **14.11.2007**
(21) Anmeldenummer: 05015390.7
(22) Anmeldetag: 15.07.2005
(51) Int. Cl.: B23K 9/16

(54) **Verfahren zum Entfernen von Einschlüssen in einer Schweissnaht und Vorrichtung zur Durchführung des Verfahrens**
Procedure for removing inclusions from a welding seam and device to the execution of the procedure
Procédure pour enlever des inclusions d'une couture de soudure et dispositif à l'exécution du procédé

(30) Priorität: 10.08.2004 DE 102004038714
(43) Veröffentlichungstag der Anmeldung: 15.02.2006
(73) Patentinhaber: Hammelmann Maschinenfabrik GmbH, 59302 Oelde (DE)
(72) Erfinder: Helmig, Egbert, Dipl.-Ing., 59320 Ennigerloh (DE)
(74) Vertreter: Specht, Peter

(56) Entgegenhaltungen:
- DE-A1- 3 626 300
- DE-C1- 19 930 852
- US-A- 3 536 883
- US-A- 4 050 958
- PATENT ABSTRACTS OF JAPAN Bd. 1999, Nr. 03, 31. März 1999 (1999-03-31) & JP 10 339290 A (HITACHI LTD; HITACHI TECHNO ENG CO LTD), 22. Dezember 1998 (1998-12-22)
- PATENT ABSTRACTS OF JAPAN Bd. 015, Nr. 156 (P-1192), 18. April 1991 (1991-04-18) & JP 03 025363 A (SUMITOMO METAL IND LTD; others: 01), 4. Februar 1991 (1991-02-04)

## Beschreibung

Die vorliegende Erfindung betrifft ein Verfahren zum Entfernen von Einschlüssen in einer Schweißnaht gemäß dem Oberbegriff des Anspruchs 1 sowie eine Vorrichtung zur Durchführung des Verfahrens.

Beim Schweißen mittels Schutzgas-Schweißverfahren kommt es zu Ausfällungen von im Metall der durch das Schweißen miteinander verbundenen Bauteile und/oder in den Schweißzusatzstoffen vorhandenen Bestandteilen von beispielsweise Silizium, das sich vorwiegend als Mangansilikat im Oberflächenbereich der Schweißnaht ablagert.

Schutzgasschweißungen sind mit unterschiedlichen Verfahren durchführbar, beispielhaft sei hier zu nennen, das Metall-Inertgas(MIG)-Schweißen oder das "Metall-Aktivgas-Schweißen mit Mischgas (MAGM).

Solche Ablagerungen, die in einem Größenbereich von 0,2 bis 1 mm, also sehr klein vorliegen, sind unregelmäßig über die Schweißnahtlänge und -breite verteilt.

Dabei haften die Silikate sehr stark am Schweißgut an, was teilweise durch Überlappung des Nahtmaterials über den Einschluss hinaus verstärkt ist.

Die Entfernung von Silikaten-Einschlüssen im Bereich solcher Hinterschneidungen ist mit bekannten Verfahren, wie sie beispielsweise aus der JP 103 39 290 A (Abstract) und der DE 36 26 300 A1 bekannt sind, nicht entfernbar.

In der letztgenannten Literatur wird vorgeschlagen, Einschlüsse mittels eines abrasiven Hochdruckwasserstrahls zu entfernen, wobei als Abrasivstoff ein feinkörniges, sandartiges Material eingesetzt werden soll.

Allerdings führt der Einsatz eines solchen Abrasivstoffes zu Verschmutzungen der Bauteile, die in einem nachfolgenden Reinigungsprozess gesäubert werden müssen, um sie für eine Weiterbearbeitung vorzubereiten. Naturgemäß ist dies nur mit einem erheblichen Arbeitsaufwand verbunden, der eine rationelle Anwendung der bekannten Verfahren nicht zulässt und somit für den Einsatz insbesondere zur Bearbeitung von Großserienteilen nicht geeignet ist.

Als sehr nachteilig ist auch die abrasive Wirkung des Strahlmittels auf Prozesseinrichtungen, wie Roboter oder dergleichen anzusehen, die durch eindringenden Abrasivstoff in ihrer Funktionsfähigkeit eingeschränkt werden können, zumindest hinsichtlich ihrer Standzeit.

Die genannten Einschlüsse führen zu einer erhöhten Korrosionsgefahr, die im Laufe der Zeit die Festigkeit der Schweißnaht beeinträchtigt. Vor allem den vielfachen Bestrebungen bspw. im Automobilbau für geschweißte Komponenten eine längere Betriebsdauer zu gewährleisten, steht dieser Umstand entgegen.

Da diese nicht metallischen Einschlüsse, vor allem die Silikate, geringere Adhäsionskräfte aufweisen als das die Schweißnaht im übrigen bildende Material, ergeben sich aufgrund der mangelnden Haftfähigkeit der Einschlüsse Beschichtungsfehler, wenn das zusammengeschweißte Bauteil mit einer Beschichtung beispielsweise einer Verzinkung oder einem Farbauftrag versehen wird.

Solche Beschichtungsfehler beeinträchtigen nicht nur den optischen Gesamteindruck, sondern bilden auch potentielle Korrosionsstellen.

Die bislang einzige bekannte Möglichkeit, die Einschlüsse im Oberflächenbereich in der Schweißnaht zuverlässig zu beseitigen, besteht im Grunde nur aus einer spangebenden Bearbeitung, wie Schleifen oder dergleichen, bei der zwangsläufig auch die einschlussfreien Bereiche, zumindest partiell, entsprechend mit bearbeitet werden.

Allerdings ist eine derartige Bearbeitung mit einem sehr hohen Aufwand verbunden, der einer kostengünstigen Fertigung insbesondere solcher Teile entgegensteht, die als Großserienteile Verwendung finden, beispielsweise im Automobilbau.

Der vorliegenden Erfindung liegt daher die Aufgabe zugrunde, ein Verfahren der gattungsgemäßen Art so weiter zu entwickeln, dass eine zuverlässige, rationale Entfernung von Einschlüssen in der Schweißnaht möglich ist.

Diese Aufgabe wird durch ein Verfahren mit den Merkmalen des Anspruchs 1 gelöst, sowie durch eine Vorrichtung entsprechend dem Anspruch 12.

Wie sich überraschend gezeigt hat, werden durch eine in diesem Sinne durchgeführte Bearbeitung der Schweißnaht die im Oberflächenbereich vorhandenen Einschlüsse, insbesondere Silikate, herausgelöst, wobei zumindest ein Strahl des fluiden Mediums, vorzugsweise Wasser, die Einschlüsse im Grenzbereich zum benachbarten Material angreift und die vorhandene Verbindung löst.

Dabei steht das Medium unter einem Druck von 1.500 bis 4.000 bar, vorzugsweise 2.500 bis 3.000 bar.

Da die einzelnen Einschlüsse nicht geortet und gezielt einzeln angestrahlt werden können, muss die gesamte Fläche der Schweißnaht gestrahlt werden. Dies erfolgt besonders wirtschaftlich mittels eines rotierenden Düsenkopfes, der mehrere Düsen (n >= 2) aufweist. Erfindungsgemäß treffen die aus den Düsen austretenden einzelnen Strahlen unter verschiedenen Winkeln auf die Schweißnaht auf, wodurch gewährleistet ist, dass mindestens ein Strahl den schwächsten Anschlusspunkt des Silikats am Metall erreicht und so den Einschluss löst.

Vorzugsweise sind die Düsen des Düsenkopfes aufeinander zugerichtet, wodurch eine Fokussierung über eine Abstandsverstellung erleichtert wird. Diese Abstandsverstellung kann auch während des Verfahrens variiert werden.

Nach einer vorteilhaften Weiterbildung der Erfindung ist vorgesehen, dass die Düsen, bezogen auf die Drehachse des Düsenkopfes, exzentrisch angeordnet sind und zwar in unterschiedlichen Abständen zur Mitte der Drehachse. Bei kleiner Exzentrizität kann eine zusätzliche axial ausgerichtete Düse vorgesehen sein.

Das Entfernen der Einschlüsse mittels des fluiden Mediums stellt im Gegensatz zum Stand der Technik keine in diesem Sinne spangebende Bearbeitung dar, wenn man einmal von dem Herauslösen der Einschlüsse und u.U. einer gewissen abrasiven Wirkung auf die Schweißnaht insgesamt absieht, so dass eine außerordentlich effektive Bearbeitung gegeben ist. Diese lässt sich im übrigen vollständig automatisieren, woraus sich erhebliche Kostenvorteile ergeben, bei gleichzeitiger Optimierung der Schweißnaht-Oberfläche hinsichtlich einer Korrosionsbeständigkeit bzw. einer Beschichtungsfähigkeit. Letztere schafft die Vorrausetzungen für eine vollständig geschlossene Beschichtung, die den gewünschten Zweck, beispielsweise Korrosionsschutz oder Oberflächengestaltung, uneingeschränkt erfüllt.

Eine Optimierung der Bearbeitung der Schweißnaht, bezogen sowohl auf das Bearbeitungsergebnis wie auch auf fertigungssrelevante Daten, beispielsweise Energie- oder Mediumverbrauch und Bearbeitungsgeschwindigkeit, ergibt sich bei einem Druck des Mediums, vorzugsweise des Wassers von 1.500 bis 3.500 bar, mehreren Austrittsöffnungen der Düse mit jeweils einem Durchmesser von 0,4 bis 0,8 mm, einer Vorschubgeschwindigkeit von 60 bis 90 mm/s, einer Drehzahl der Düse von 1.000 bis 2000 min⁻¹ sowie einem Abstand der Düse zur Schweißnaht von etwa 15 bis 30 mm.

Weitere vorteilhafte Ausbildungen der Erfindung sind in den Unteransprüchen gekennzeichnet.

Ausführungsbeispiele der Vorrichtung werden nachfolgend anhand der beigefügten Zeichnungen beschrieben.

Es zeigen:
- Figur 1: einen Teil einer erfindungsgemäßen Vorrichtung in einer Betriebsstellung in einer Seitenansicht
- Figur 2: eine vergrößerte Einzelheit der Figur 1
- Figur 3: die Vorrichtung in einer schematischen Unteransicht

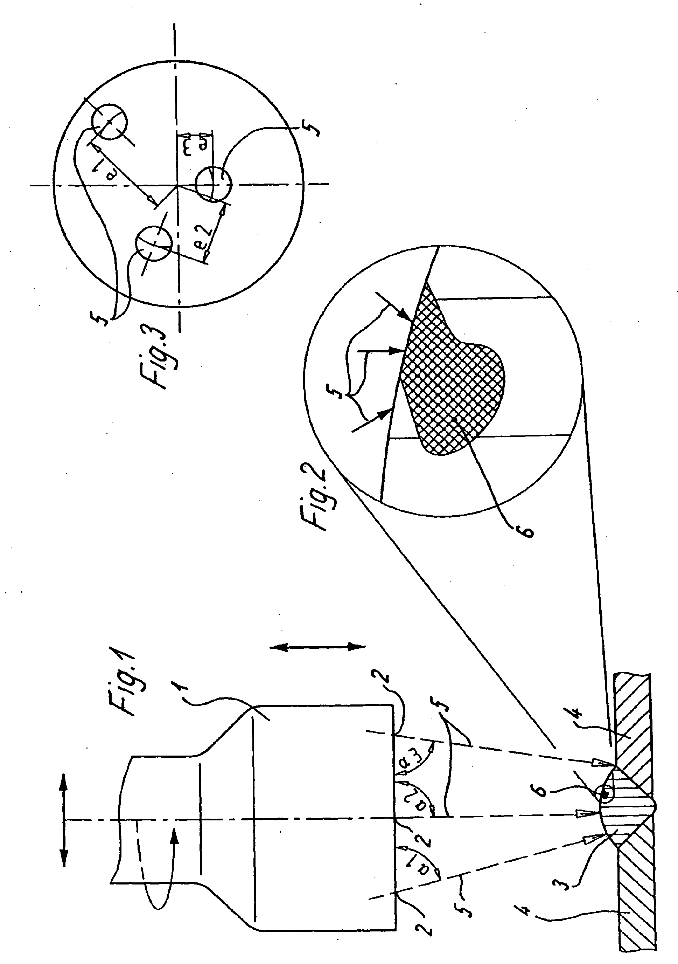

In der Figur 1 ist eine Vorrichtung zur Entfernung von Einschlüssen, insbesondere Silikaten im Oberflächenbereich einer unter Schutzgas hergestellten Schweißnaht 3 dargestellt, mit der zwei metallische Bauteile 4 miteinander verbunden sind.

Die Vorrichtung weist einen Düsenkopf 1 auf, der rotierend und/oder oszillierend an einem nicht dargestellten Drehantrieb angeschlossen ist.

Endseitig ist der Düsenkopf 1 mit im vorliegenden Ausführungsbeispiel drei Düsen 2 versehen, aus denen jeweils ein Strahl 5 eines unter Hochdruck stehenden fluiden Mediums austritt, wobei die Austrittswinkel α1 bis α3 unterschiedlich nach innen, das heißt, aufeinander zu gerichtet sind und die Schweißnaht 3 unter entsprechenden Auftreffwinkeln beaufschlagen.

Wie insbesondere die Figur 3 sehr deutlich zeigt, sind die Düsen 2 exzentrisch zur Drehachse des Düsenkopfes 1 angeordnet und zwar in unterschiedlichen Abständen el bis e3.

Durch die unterschiedlichen Auftreffwinkel einerseits, die verschiedenen Exzentrizitäten der Düsen 2 sowie der rotierenden und/oder oszillierenden Bewegung des Düsenkopfes 1 wird jeder Oberflächenbereich der Schweißnaht 3 mit einem Hochdruckstrahl 5 beaufschlagt, wobei der Düsenkopf insgesamt entsprechend dem Verlauf der zu bearbeitenden Schweißnaht verfahrbar montiert sein kann, beispielsweise an einem Roboter oder dergleichen, während das entsprechende Werkstück fest positioniert ist, oder das Werkstück relativ gegenüber dem dann feststehenden Düsenkopf 1. In jedem Fall wird zuverlässig erreicht, das vorhandene Einschlüsse 6 durch einen der Strahlen 5 aus der Verbindung mit der Schweißnaht im übrigen gelöst wird.

Die Vorrichtung insgesamt kann entsprechend dem Verlauf der zu bearbeitenden Schweißnaht verfahrbar montiert sein, beispielsweise an einem Roboter oder dergleichen, während das entsprechende Werkstück fest positioniert ist.

Denkbar ist aber auch, das Werkstück relativ gegenüber der dann feststehenden Vorrichtung zu bewegen.

## Patentansprüche

1. Verfahren zum Entfernen von Einschlüssen (6), insbesondere Silikaten, im Oberflächenbereich einer unter Schutzgas hergestellten, metallische Bauteile (4) miteinander verbindenden Schweißnaht (3), **dadurch gekennzeichnet, dass** die Schweißnaht (3) von mehreren Strahlen (5) eines unter Hochdruck stehenden fluiden Mediums unter unterschiedlichen Auftreffwinkeln beaufschlagt wird.

2. Verfahren nach Anspruch 1, **dadurch gekennzeichnet, dass** die Strahlen (5) gleichzeitig aufgebracht werden.

3. Verfahren nach Anspruch 1 oder 2, **dadurch gekennzeichnet, dass** die Strahlen (5) rotierend und/oder oszillierend auf die Schweißnaht (3) aufgebracht werden.

4. Verfahren nach einem der vorhergehenden Ansprüche, **dadurch gekennzeichnet, dass** zumindest ein Teil der einzelnen Strahlen (5) aufeinander zugerichtet geneigt verlaufen.

5. Verfahren nach einem der vorhergehenden Ansprüche, **dadurch gekennzeichnet, dass** die Strahlen (5) kontinuierlich entlang der Schweißnaht (3) geführt werden.

6. Verfahren nach einem der vorhergehenden Ansprüche, **dadurch gekennzeichnet, dass** die Schweißnaht (3) relativ zu den Auftreffbereichen der Strahlen (5) bewegt wird.

7. Verfahren nach einem der vorhergehenden Ansprüche, **dadurch gekennzeichnet, dass** die Strahlen (5) in unterschiedlichen Abständen-(el bis e3) aus einem Düsenkopf (1) geführt werden.

8. Verfahren nach einem der vorhergehenden Ansprüche, **dadurch gekennzeichnet, dass** zumindest ein Strahl (5), bezogen auf die Mittelachse des Düsenkopfes (1) axial geführt ist.

9. Verfahren nach einem der vorhergehenden Ansprüche, **dadurch gekennzeichnet, dass** das fluide Medium unter einem Druck von 1.500 bis 4.000 bar steht.

10. Vorrichtung zur Durchführung des Verfahrens nach Anspruch 1, **dadurch gekennzeichnet, dass** eine Anordnung mehrerer Düsen (2) für ein unter Hochdruck stehendes fluides Medium vorgesehen ist, die in unterschiedlichen Winkeln geneigt (α1 - α3) verlaufen.

11. Vorrichtung nach Anspruche 10, **dadurch gekennzeichnet, dass** zumindest ein Teil der Düsen (2) aufeinander zugerichtet geneigt verlaufen.

12. Vorrichtung nach Anspruch 10 oder 11, **dadurch gekennzeichnet, dass** die Düsen (2) in einem Düsenkopf (1) angeordnet sind.

13. Vorrichtung nach einem der Ansprüche 10 bis 12, **dadurch gekennzeichnet, dass** der Düsenkopf (1) rotierend und/oder oszillierend bewegbar ist.

14. Vorrichtung nach einem der Ansprüche 10 bis 13, **dadurch gekennzeichnet, dass** diese relativ zu der zu bearbeitenden Schweißnaht (3) bewegbar ist.

15. Vorrichtung nach einem der Ansprüche 10 bis 14, **dadurch gekennzeichnet, dass** die Relativbewegung der Vorrichtung oder des mit der Schweißnaht (3) versehenen Werkstückes etwa 60 bis 90 mm /s beträgt.

16. Vorrichtung nach einem der Ansprüche 10 bis 15, **dadurch gekennzeichnet, dass** die Drehzahl des Düsenkopfes (1) bei Betrieb etwa 1.000 bis 2.000 min⁻¹ ist.

17. Vorrichtung nach einem der Ansprüche 10 bis 16, **dadurch gekennzeichnet, dass** der Durchmesser der Düsen (2) etwa 0,4 bis 0,8 mm ist.

## Claims

1. Procedure for removing inclusions (6), in particular silicates, in the surface region of a welding seam (3) that is produced under inert gas and connects metallic components (4) to one another, **characterized in that** the welding seam (3) is subjected to a number of streams (5) of a fluid medium under high pressure at different angles of impingement.

2. Procedure according to Claim 1, **characterized in that** the streams (5) are applied simultaneously.

3. Procedure according to Claim 1 or 2, **characterized in that** the streams (5) are applied to the welding seam (3) in a rotating and/or oscillating manner.

4. Procedure according to one of the preceding claims, **characterized in that** at least some of the individual streams (5) are inclined towards one another.

5. Procedure according to one of the preceding claims, **characterized in that** the streams (5) are directed continuously along the welding seam (3).

6. Procedure according to one of the preceding claims, **characterized in that** the welding seam (3) is moved in relation to the areas of impingement of the streams (5).

7. Procedure according to one of the preceding claims, **characterized in that** the streams (5) are directed from a nozzle head (1) at different distances (e1 to e3).

8. Procedure according to one of the preceding claims, **characterized in that** at least one stream (5) is axially directed with respect to the centre axis of the nozzle head (1).

9. Procedure according to one of the preceding claims, **characterized in that** the fluid medium is under a pressure of 1500 to 4000 bar.

10. Device for carrying out the procedure according to Claim 1, **characterized in that** an arrangement of a number of nozzles (2) for a fluid medium under high pressure is provided, said nozzles being inclined at different angles (α1 - α3).

11. Device according to Claim 10, **characterized in that** at least some of the nozzles (2) are inclined towards one another.

12. Device according to Claim 10 or 11, **characterized in that** the nozzles (2) are arranged in a nozzle head (1).

13. Device according to one of Claims 10 to 12, **characterized in that** the nozzle head (1) is movable in a rotating and/or oscillating manner.

14. Device according to one of Claims 10 to 13, **characterized in that** it is movable in relation to the welding seam (3) to be worked.

15. Device according to one of Claims 10 to 14, **characterized in that** the relative movement of the device or of the workpiece provided with the welding seam (3) is approximately 60 to 90 mm/s.

16. Device according to one of Claims 10 to 15, **characterized in that** the rotational speed of the nozzle head (1) during operation is approximately 1000 to 2000 rpm.

17. Device according to one of Claims 10 to 16, **characterized in that** the diameter of the nozzles (2) is approximately 0.4 to 0.8 mm.

## Revendications

1. Procédé de suppression des inclusions (6), en particulier des silicates, dans la zone superficielle d'un cordon de soudure (3) réalisé sous atmosphère protectrice et reliant des pièces (4) métalliques entre elles, **caractérisé en ce que** le cordon de soudure (3) est sollicité sous différents angles d'incidence par plusieurs jets (5) d'un milieu fluide sous haute pression.

2. Procédé selon la revendication 1, **caractérisé en ce que** les jets (5) sont appliqués simultanément.

3. Procédé selon la revendication 1 ou 2, **caractérisé en ce que** les jets (5) sont appliqués de manière rotative et/ou oscillante sur le cordon de soudure (3).

4. Procédé selon l'une quelconque des revendications précédentes, **caractérisé en ce qu'**au moins une partie des jets (5) individuels sont projetés sous forme inclinée en étant dirigés les uns vers les autres.

5. Procédé selon l'une quelconque des revendications précédentes, **caractérisé en ce que** les jets (5) sont guidés en continu le long du cordon de soudure (3).

6. Procédé selon l'une quelconque des revendications précédentes, **caractérisé en ce que** le cordon de soudure (3) est déplacé par rapport aux zones d'incidence des jets (5).

7. Procédé selon l'une quelconque des revendications précédentes, **caractérisé en ce que** les jets (5) sont guidés à des distances différentes (e1 à e3) hors d'une tête de buse (1).

8. Procédé selon l'une quelconque des revendications précédentes, **caractérisé en ce qu'**au moins un jet (5) est guidé dans le sens axial par rapport à l'axe médian de la tête de buse (1).

9. Procédé selon l'une quelconque des revendications précédentes, **caractérisé en ce que** le milieu fluide est soumis à une pression de 1 500 à 4 000 bars.

10. Dispositif destiné à la mise en oeuvre du procédé selon la revendication 1, **caractérisé en ce qu'**il est prévu un agencement de plusieurs buses (2) pour un milieu fluide sous haute pression, lesquelles sont orientées selon des angles différents (α1 - α3).

11. Dispositif selon la revendication 10, **caractérisé en ce qu'**au moins une partie des buses (2) sont inclinées en étant dirigées les unes vers les autres.

12. Dispositif selon la revendication 10 ou 11, **caractérisé en ce que** les buses (2) sont agencées dans une tête de buse (1).

13. Dispositif selon l'une quelconque des revendications 10 à 12, **caractérisé en ce que** la tête de buse (1) est mobile de manière rotative et/ou oscillante.

14. Dispositif selon l'une quelconque des revendications 10 à 13, **caractérisé en ce que** celui-ci peut être déplacé par rapport au cordon de soudure (3) à traiter.

15. Dispositif selon l'une quelconque des revendications 10 à 14, **caractérisé en ce que** le mouvement relatif du dispositif ou de la pièce munie du cordon de soudure (3) est de l'ordre de 60 à 90 mm/s environ.

16. Dispositif selon l'une quelconque des revendications 10 à 15, **caractérisé en ce que** la vitesse de rotation de la tête de buse (1) en cours de service est de 1 000 à 2 000 min⁻¹.

17. Dispositif selon l'une quelconque des revendications 10 à 16, **caractérisé en ce que** le diamètre des buses (2) mesure 0,4 à 0,8 mm environ.
